# FASCICULE DE BREVET EUROPEEN

(11) **EP 3 122 478 B1**
(45) Date de publication et mention de la délivrance du brevet: **16.05.2018**
(21) Numéro de dépôt: 15713980.9
(22) Date de dépôt: 05.03.2015
(51) Int. Cl.: B07C 1/00

(54) **MACHINE DE TRI POSTAL AVEC DES BRAS DE MANUTENTION ROBOTISES**
POSTSORTIERMASCHINE MIT ROBOTERHANDHABUNGSARM
POSTAL SORTING MACHINE WITH ROBOTIC HANDLING BRANCH

(30) Priorité: 25.03.2014 FR 1452530
(43) Date de publication de la demande: 01.02.2017
(73) Titulaire: Solystic, 92220 Bagneux (FR)
(72) Inventeur: KARA, Karim, F-26120 Chabeuil (FR); PETIT, Jacques, F-26500 Bourg Les Valence (FR); CREST, Karine, F-26800 Etoile Sur Rhone (FR); CAMPAGNOLLE, Pierre, F-26400 Allex (FR); MOULLARD, Eric, F-07500 Guilherand-Granges (FR); RIEU, Jean, F-07800 Saint Georges Les Bains (FR)
(74) Mandataire: Prugneau, Philippe
(86) Numéro de dépôt international: PCT/FR2015/050541
(87) Numéro de publication internationale: WO 2015/145012

(56) Documents cités:
- DE-A1-102007 038 834

## Description

### Domaine technique

Le domaine de l'invention est celui du tri postal et plus particulièrement du tri postal automatique d'articles de courrier à l'aide d'un convoyeur de tri ayant des sorties de tri et qui est adapté pour déplacer en série les articles de courrier le long des sorties de tri et diriger sélectivement chaque article de courrier vers une sortie de tri qui correspond à l'adresse postale apposée sur l'article de courrier.

### Technique antérieure

On connaît déjà des machines de tri comprenant un convoyeur de tri du type à bandes de pincement pour réaliser du tri mécanisé d'articles de courrier plats de petit format tels que des lettres ou analogue.

On connaît aussi des machines de tri postal comprenant un convoyeur de tri du type carrousel à godets pour réaliser du tri mécanisé du courrier mélangé comprenant des articles de courrier plats de petit format et des articles de courrier plats de plus grand format comme les magasines ou analogue.

Le document DE-A-102007038834 fait référence quant à lui à une machine de tri postal comprenant un bras robotisé de manutention adapté pour prélever des articles de courrier un par un et les disposer sur un convoyeur.

Ces articles de courrier mécanisables de petit ou de grand format peuvent par exemple présenter des dimensions en longueur de 140 à 380mm, en hauteur de 90 à 260mm et en épaisseur de 0,5 à 32mm, un poids pouvant aller de 10g à 2kg. Ces articles de courrier mécanisables peuvent être conditionnés sous enveloppe en papier, sous enveloppe en plastique et même être conditionnés en liasse cerclée.

Le spectre des objets postaux distribués par les Postes inclut aussi des petits paquets ou colis dont les dimensions, le poids et le conditionnement sont très hétérogènes avec des valeurs qui peuvent aller au delà des valeurs indiquées plus haut. Par exemple, on peut avoir des petits paquets de 100mm d'épaisseur et de 5kg.

Ce type d'objets postaux hétérogènes est trié en automatique sur des machines volumineuses et de cadence réduite. Les petits paquets ou colis sont aujourd'hui triés à l'écart des articles de courrier plats homogènes ce qui augmente les coûts du tri postal.

### Résumé de l'invention

Le but de l'invention est de proposer une solution pour augmenter le spectre des objets postaux triés mécaniquement.

Un autre but de l'invention est en particulier de fournir une solution pour trier dans une même machine de tri postal automatique comprenant un convoyeur de tri ayant des sorties de tri, à la fois des articles de courrier plats homogènes et des objets postaux hétérogènes de type petits paquets ou colis.

Un autre but de l'invention est de proposer une telle machine de tri postal dont l'encombrement et l'emprise au sol reste faible.

L'idée à la base de l'invention est d'alimenter le convoyeur de tri dans une machine de tri postal, d'une part en objets postaux hétérogènes tels que petits paquets et colis par l'intermédiaire d'une antenne d'alimentation spécifique adaptée aux spécificités physiques de ces objets postaux, et d'autre part en articles de courrier plats homogènes par l'intermédiaire d'une autre antenne d'alimentation qui reste classique et adaptée aux articles de courrier plats homogènes.

A cet effet, l'invention a pour objet une antenne d'alimentation en objets postaux hétérogènes tels que petits paquets ou colis destinée à alimenter en objets postaux hétérogènes un convoyeur de tri ayant des sorties de tri, comprenant une entrée adaptée pour recevoir lesdits objets postaux hétérogènes, au moins un bras de manutention robotisé de type "prélève et place" adapté pour prélever les objets postaux hétérogènes un à un et les placer en série sur un convoyeur à plat qui les déplace en série à plat suivant un certain trajet de convoyage, un moyen de prise d'images disposé le long dudit trajet de convoyage pour former une image numérique de chaque objet postal comportant une adresse postale, et un moyen de transfert disposé à une extrémité dudit trajet de convoyage pour transférer chaque objet postal du convoyeur à plat dans le convoyeur de tri, caractérisée en ce qu'elle comprend au moins un premier bras de manutention robotisé qui est adapté pour réaliser un égrenage desdits objets postaux hétérogènes et au moins un second bras de manutention robotisé qui est adapté pour mettre en série à plat lesdits objets postaux égrenés.

Une telle antenne d'alimentation spécifique pour des objets postaux hétérogènes de type petits paquets ou colis peut présenter avantageusement les particularités suivantes :
- le second bras de manutention robotisé est adapté en outre pour orienter les objets postaux hétérogènes suivant une direction longitudinale de transport du convoyeur à plat et les placer en série à pas constant sur le convoyeur à plat ;
- le premier bras de manutention robotisé comporte six degrés de liberté et le second bras de manutention robotisé comporte quatre degrés de liberté ;
- chaque bras de manutention comporte un organe de préhension pneumatique à ventouse ;
- elle comporte un convoyeur circulaire à plat entre l'entrée d'introduction des objets postaux et le ou les bras de manutention robotisés ;
- le moyen de transfert est un carrousel à plateaux basculants ;
- le moyen de prise d'images est disposé sur deux côtés opposés du convoyeur à plat pour former deux images numériques respectivement de deux côtés opposés de chaque objet postal.

L'invention s'étend à une machine de tri postal comprenant un convoyeur de tri ayant des sorties de tri, caractérisée en ce qu'elle comprend une première antenne d'alimentation selon au moins la revendication 1 adaptée pour injecter dans le convoyeur de tri des objets postaux hétérogènes et une seconde antenne d'alimentation adaptée pour injecter dans le convoyeur de tri des articles de courrier plats homogènes.

Cette machine de tri postal peut encore présenter les particularités suivantes :
- le convoyeur de tri est un convoyeur à godets avec des godets qui circulent suivant un trajet en boucle fermée ;
- les godets du convoyeur à godets ont une grande dimension orientée transversalement à la direction de circulation des godets suivant le trajet en boucle fermée ;
- les sorties de tri du convoyeur de tri sont munies chacune d'un réceptacle de sortie de tri dans lequel des articles de courrier plats homogènes triés sont disposés à plat avec des objets postaux hétérogènes triés.

Un exemple de réalisation de l'invention est décrit ci-après et illustré par les dessins.

### Présentation sommaire des dessins

La figure 1 illustre de façon très schématique en perspective une machine de tri postal selon l'invention.
La figure 2 illustre de façon schématique en perspective une partie amont d'une antenne d'alimentation automatique en objets postaux hétérogènes.
La figure 3 illustre de façon schématique en perspective une partie aval de l'antenne d'alimentation de la figure 2.
La figure 4 illustre de façon schématique selon une autre perspective la partie aval de l'antenne d'alimentation de la figure 2 avec les godets d'un convoyeur à godets.
La figure 5 illustre un plateau du convoyeur à plateaux basculants qui est en position inclinée.
La figure 6 illustre la surface striée d'un plateau basculant.

### Description des modes de réalisation

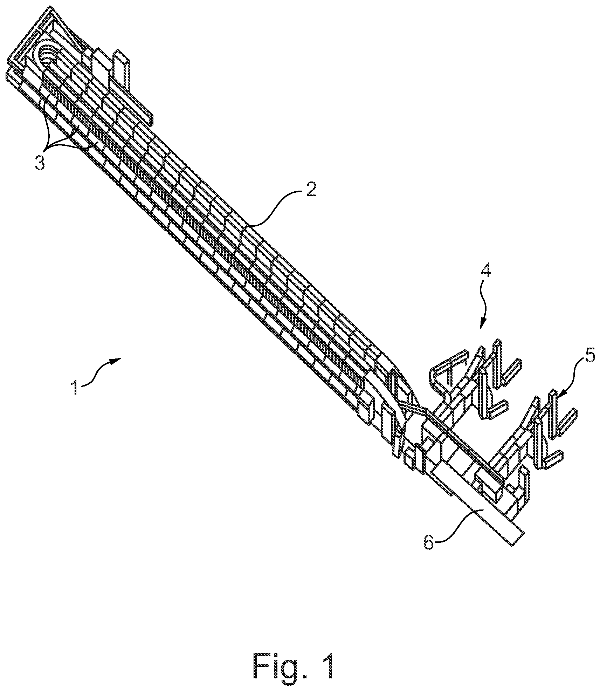

Sur la figure 1, on a illustré une machine de tri postal 1 selon l'invention vue dans son ensemble et comprenant ici dans l'exemple un convoyeur de tri du type carrousel à godets 2.

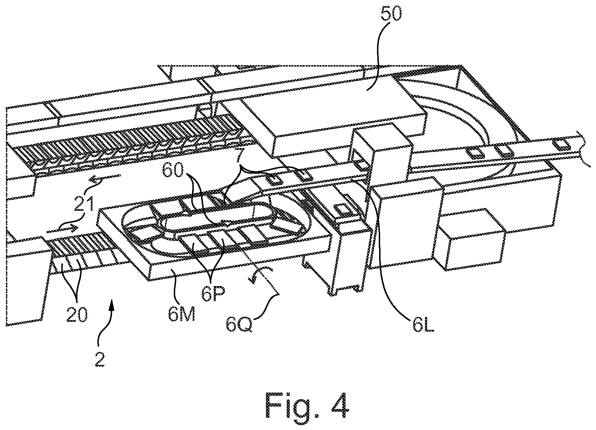

Le carrousel à godets 2 comporte des godets (non représentés sur la figure 1 mais qui sont visibles sur la figure 4) qui sont adaptés pour transporter chacun au moins un objet postal qui est ici dans le cadre de l'invention un article de courrier plat ou un petit paquet ou colis.

Les godets du carrousel 2 circulent suivant un chemin en boucle fermée au dessus de réceptacles de sortie de tri 3 qui sont ici des bacs amovibles dans lesquelles les objets triés peuvent être placés en superposition à plat.

Sur la figure 1, on a illustré schématiquement deux antennes d'alimentation 4,5 qui alimentent en parallèle le carrousel à godets 2 en articles de courrier plats homogènes de petit et/ou grand format comme cela est connu de l'Homme du métier. Ces articles de courrier plats peuvent être par exemple des lettres, des magazines ou analogues.

Sur la figure 1, la référence 6 désigne une antenne d'alimentation spécifique du carrousel à godets 2 en objets postaux hétérogènes tels que petits paquets ou colis.

La machine de tri 1 est donc apte à trier dans ses sorties de tri 3 un flux de petits paquets ou colis et un flux de courrier, c'est à dire des articles de courrier plats, ce qui permet d'optimiser les coûts du tri postal.

Le conditionnement et les caractéristiques des petits paquets étant différents de ceux du courrier, chaque antenne d'alimentation a son propre point d'injection dans le carrousel à godets.

Les antennes d'alimentation 4 et 5 comportent chacune classiquement un magasin d'entrée dans lequel les articles de courrier plats sont disposés en pile sur chant, un dépileur en aval du magasin qui dépile et sérialise les articles de courrier plats, un convoyeur à bandes de pincement qui transporte les articles de courrier plats en série sur chant à écart ou pas constant devant une caméra et enfin un injecteur qui injecte chaque article de courrier plat dans un godet du carrousel.

Comme cela est connu, la caméra forme une image numérique de la face de chaque article de courrier qui comporte une adresse postal et plus particulièrement l'adresse postal de distribution de l'article de courrier et sur la base d'une reconnaissance par OCR de cette adresse de distribution dans l'image, une unité de contrôle de la machine détermine le réceptacle 3 de sortie de tri dans lequel l'article de courrier doit être déposé par le carrousel à godets.

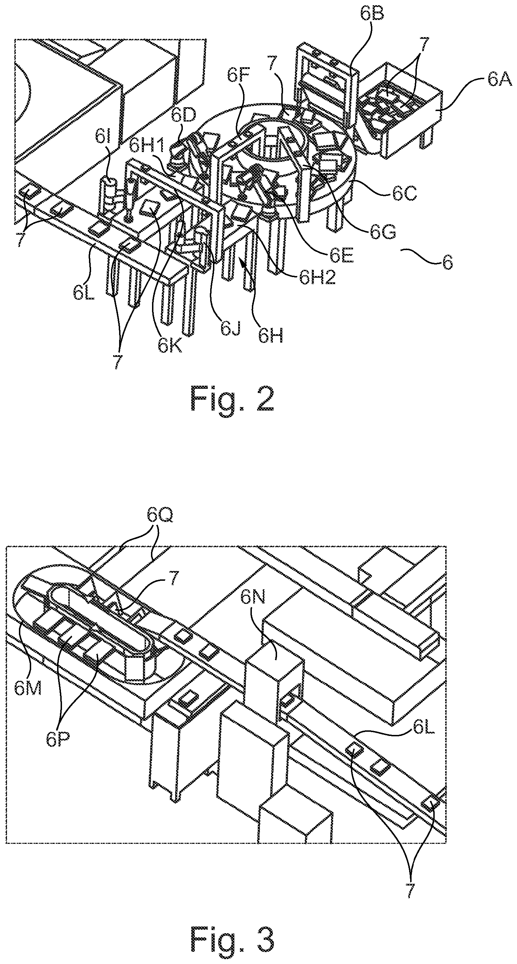

Sur la figure 2, on a illustré plus en détail maintenant l'antenne d'alimentation 6 spécifique pour des en objets postaux hétérogènes 7 tels que petits paquets et colis.

Elle comporte une entrée formée ici par une sorte de trémie 6A dans laquelle les objets postaux hétérogènes 7 sont versés en vrac.

Les objets postaux hétérogènes 7 en tas dans la trémie 6A sont dévraqués mécaniquement à l'aide d'un convoyeur à tapis 6B qui forme la sole de la trémie 6A et qui transporte les objets postaux 7 sur une pente à l'aplomb d'un convoyeur à plat circulaire 6C.

L'équipement 6A,6B,6C permet de faire une première séparation des objets postaux hétérogènes 7 ("dévracage").

Les objets postaux 7 qui tombent sur le convoyeur circulaire 6C sont ensuite égrenés et mis en série à l'aide d'au moins un bras de manutention robotisé de type "prélève et place" connu sous le terme anglais "pick and place".

Sur la figure 2, l'antenne d'alimentation 6 comporte de préférence un premier étage de bras de manutention robotisés, ici avec deux bras robotisés 6D,6E ayant chacun six degrés de liberté et associés respectivement aux systèmes de vision en 3D 6F,6G.

La fonction de ce premier étage de bras robotisés avec systèmes de vision est d'égrener les objets postaux hétérogènes 7 partiellement encore entassés sur le convoyeur circulaire 6C en les prélevant un à un et en les plaçant individuellement l'un derrière l'autre sur une extrémité d'un convoyeur à plat 6H.

Le convoyeur circulaire 6C assure une recirculation des objets postaux 7 qui n'ont pas pu être prélevés par les bras robotisés 6D,6E. Chaque bras robotisé 6D,6E peut être équipé d'un système de préhension pneumatique à ventouse.

Comme visible sur la figure 2, le convoyeur à plat 6H comporte ici deux pistes 6H1, 6H2 qui sont servies respectivement par les bras robotisés 6D,6E qui peuvent ainsi avoir des cadences de prélèvement et de mis en place différentes.

L'antenne d'alimentation 6 comporte dans l'exemple un second étage de bras de manutention robotisés disposé à l'autre extrémité du convoyeur à plat 6H en aval des bras 6D,6E, ici avec deux autres bras de manutention robotisés 6I, 6J associés à un système de vision 6K.

Les bras robotisés 6I, 6J sont ici des bras robotisés à quatre degrés de liberté, avec par exemple des préhenseurs pneumatiques à ventouse, pour prélever les objets postaux à plat respectivement depuis les pistes 6H1,6H2 et pour les déposer à plat en série sur la sole d'un autre convoyeur à plat 6L qui est adjacent au convoyeur 6H. Dans l'exemple, le convoyeur 6L est disposé perpendiculairement au convoyeur 6H ce qui permet de limiter l'emprise au sol de la machine de tri postal car le convoyeur 6L peut être dans l'alignement des sorties de tri 3 de la machine.

On a donc dans cet agencement de bras robotisés industriels disposés à poste fixe, une séparation des fonctions d'égrenage d'une part et de sérialisation d'autre part ce qui permet d'obtenir une compacité maximale pour l'unité d'alimentation 6 du fait de la flexibilité d'intégration du convoyeur à plat 6H dans des installations déjà existantes notamment.

Le deuxième étage de bras robotisés 6I, 6J peut être adapté en outre pour orienter dans le sens de la leur grande longueur (orientation mode paysage) les objets postaux hétérogènes 7 suivant la direction longitudinale du convoyeur à plat 6L. Les bras de manutention robotisés du second étage de bras robotisés peuvent alors synchroniser à pas constant les objets postaux hétérogènes sérialisés.

Sur la figure 3, on a illustré la partie aval de l'antenne d'alimentation 6 avec le convoyeur à plat 6L qui transporte en série à plat et à pas constant les objets postaux 7 vers un carrousel 6M à plateaux basculants qui sert à injecter les objets postaux hétérogènes 7 dans les godets du carrousel à godets 2.

Comme visible sur la figure 3, un système de prise d'images 6N est disposé sur le trajet du convoyeur 6L et sur les deux côtés opposés de celui-ci (au-dessus et en-dessous) pour former deux images numériques respectivement des deux côtés opposés de chaque objet postal hétérogène 7. A partir d'une de ces deux images numériques, l'unité de contrôle pourra donc évaluer dans l'image retenue une adresse de distribution pour l'objet postal de sorte à commander le convoyeur de tri pour diriger cet objet postal hétérogène dans un bac de sortie de tri correspondant.

Sur la figure 4, on voit que le carrousel à plateaux basculants 6M comporte des plateaux 6P ici dans une position horizontale qui sont montés basculants chacun autour d'un axe de rotation 6Q situé sur le côté latéral avant du plateau. A la fin du mouvement de basculement vers la position inclinée, chaque plateau est remonté automatiquement en position horizontale par un système de rampe.

Les plateaux 6P circulent, de façon synchronisée avec les godets 20 du convoyeur à godets 2, sur un trajet en boucle fermée dans le sens indiqué par les flèches 60 au dessus des godets 20 du convoyeur à godets 2. Dans l'exemple, le trajet en boucle fermée du carrousel 6M a une longueur d'environ six mètres et le carrousel 6M comporte onze plateaux 6P de forme rectangulaire, par exemple de 300mm par 500 mm, qui sont déplacés à une même vitesse d'environ 1m/s que les godets 20 et dans le même sens de circulation 21 des godets.

Chaque plateau du carrousel 6M est chargé avec un objet postal hétérogène 7 disposé à plat sur le plateau qui est en position horizontale. Les objets postaux 7 arrivent un à un sur les plateaux du convoyeur 6M par une extrémité libre en pente du convoyeur à plat 6L qui est en surplomb du carrousel à plateaux et plus particulièrement en surplomb d'une portion rectiligne de circulation des plateaux du carrousel 6M.

Comme illustré sur la figure 4, l'axe de basculement 6Q des plateaux du carrousel à plateaux est orienté transversalement à la boucle de circulation des plateaux et les godets 20 du carrousel à godets ont ici une grande dimension d'environ 400 mm (correspondant à la grande longueur des articles de courrier) qui est orientée transversalement à la boucle de circulation 21 des godets.

En position inclinée d'un angle A d'environ 60° par rapport à la verticale, comme représenté sur la figure 5, chaque plateau 6P a son côté arrière suivant le sens de circulation 60 qui plonge vers l'intérieur d'un godet 20 lequel est également incliné par rapport à la verticale.

De la sorte, l'objet postal 7 sur le plateau incliné 6P est transféré par gravité et simple glissement dans le godet 20 qui est en déplacement dans le même sens de circulation 21 et dans lequel il est stocké de manière globale sur chant sur son côté de plus grande longueur.

Sur la figure 5, on voit que l'axe de basculement 6Q est disposé à l'avant du plateau selon la direction de circulation 60 du plateau. Selon l'invention, l'axe 6Q est disposé à une distance L2 par rapport à l'avant du plateau 6P suivant le sens de circulation 60 qui est comprise entre 1/5 et 1/3 de la longueur L1 (ici environ 500mm) du plateau suivant ce sens de circulation. Des essais ont montré qu'une distance L2 égale à 1/4 de L1 est un bon compromis pour obtenir la plus grande plage de positions de dépose sur le plateau pour des objets 7 de tout le spectre du courrier postal incluant les articles de courrier homogènes et les objets postaux hétérogènes.

La surface supérieur des plateaux de dépose des objets 7 présente un coefficient de frottement qui est choisi pour augmenter la plage de positions de dépose des objets 7 en retardant légèrement le moment de glissement des objets lors du basculement en position inclinée du plateau 6P. Par ailleurs, comme représenté sur la figure 6, la surface supérieure de chaque plateau 6P présente des stries 22 parallèles qui s'étendent suivant la flèche 60 qui évitent le ralentissement par effet ventouse des objets 7 emballés sous plastique.

La face supérieur de chaque plateau est donc ondulée ce qui permet un passage d'air sous l'objet 7 placé sur le plateau. Le ratio largeur d'une strie/largeur d'un creux est voisin de 1/10 ce qui permet d'éviter cet effet ventouse tout en offrant un portage suffisant pour l'objet 7.

La longueur L1 du plateau doit permettre un glissement de l'objet sur le plateau de telle sorte que son bord inférieur arrive en bas du plateau quand le plateau arrive en butée sur sa position inclinée.

A noter que l'unité de contrôle de la machine de tri postal commande le carrousel 6M pour que les plateaux du carrousel 6M se déplacent de manière synchrone avec les godets 20 du carrousel 2.

Le point d'injection des objet postaux hétérogènes 7 dans le carrousel 2 se situe donc au niveau du carrousel à plateaux 6M tandis que le point d'injection des articles de courrier plats homogènes dans le carrousel 2 se situe à un autre endroit différent, ici par exemple à l'extrémité 50 de l'antenne d'alimentation 5.

Comme cela apparaît sur la figure 4, le point d'injection des objets postaux hétérogènes dans le convoyeur à godets 2 se situe plus particulièrement sur une portion de circulation rectiligne des plateaux du convoyeur à plateaux 6M qui se superpose à une portion de circulation rectiligne des godets 20 du convoyeur à godets 2. La portion rectiligne de circulation des plateaux fait ici environ 2m.

Sur la figure 4, on a illustré des godets 20 avec chacun trois compartiments de chargement adjacents suivant la direction de circulation 21. Chaque compartiment peut être dimensionné pour transporter un article de courrier homogène ou un objet postal hétérogène.

On pourrait prévoir pour chaque godet 20 un compartiment spécifique pour les articles de courrier plats homogènes et un compartiment spécifique pour les objets postaux hétérogènes.

On pourrait aussi prévoir des godets 20 dans lesquels ces compartiments spécifiques seraient juxtaposés (disposés côte à côte perpendiculairement à la direction 21) sans sortir du cadre de l'invention.

A titre d'exemple, la synchronisation entre le carrousel à plateaux 6M de l'antenne spécifique 6 peut être réglée avec le débit du carrousel à godets 2 pour avoir un objet postal hétérogène 7 à injecter tous les six godets consécutifs 20 du carrousel 2.

## Revendications

1. Antenne d'alimentation (6) en objets postaux hétérogènes (7) tels que petits paquets ou colis destinée à alimenter en objets postaux hétérogènes un convoyeur de tri ayant des sorties de tri, comprenant une entrée adaptée pour recevoir lesdits objets postaux hétérogènes, au moins un bras de manutention robotisé (6D, 6E, 6I, 6J) de type "prélève et place" adapté pour prélever les objets postaux hétérogènes un à un et les placer en série sur un convoyeur à plat (6L) qui les déplace en série à plat suivant un certain trajet de convoyage, un moyen de prise d'images (6N) disposé le long dudit trajet de convoyage pour former une image numérique de chaque objet postal comportant une adresse postale, et un moyen de transfert (6M) disposé à une extrémité dudit trajet de convoyage pour transférer chaque objet postal du convoyeur à plat dans le convoyeur de tri, au moins un premier bras de manutention robotisé (6D,6E) qui est adapté pour réaliser un égrenage desdits objets postaux hétérogènes **caractérisée en ce qu'**elle comprend au moins un second bras de manutention robotisé (6I, 6J) qui est adapté pour mettre en série à plats lesdits objets postaux égrenés.

2. Antenne d'alimentation selon la revendication 1, **caractérisée en ce que** ledit second bras de manutention robotisé (6I, 6J) est adapté en outre pour orienter lesdits objets postaux hétérogènes (7) suivant une direction longitudinale de transport du convoyeur à plat et les placer en série à pas constant sur ledit convoyeur à plat.

3. Antenne d'alimentation selon la revendication 1 ou 2, **caractérisée en ce que** ledit premier bras de manutention robotisé (6D,6E) comporte six degrés de liberté et ledit second bras de manutention robotisé (6I, 6J) comporte quatre degrés de liberté.

4. Antenne d'alimentation selon l'une des revendications précédentes, **caractérisée** en ce chaque bras de manutention comporte un organe de préhension pneumatique à ventouse.

5. Antenne d'alimentation selon l'une des revendications précédentes, **caractérisée en ce qu'**elle comporte un convoyeur circulaire à plat (6C) entre l'entrée d'introduction des objets postaux et le ou les bras de manutention robotisés.

6. Antenne d'alimentation selon l'une des revendications précédentes, **caractérisée en ce que** le moyen de transfert est un carrousel à plateaux basculants (6P).

7. Antenne d'alimentation selon l'une des revendications précédentes, **caractérisée en ce que** le moyen de prise d'images (6N) est disposé sur deux côtés opposés du convoyeur à plat pour former deux images numériques respectivement de deux côtés opposés de chaque objet postal.

8. Machine de tri postal comprenant un convoyeur de tri ayant des sorties de tri, **caractérisée en ce qu'**elle comprend une première antenne d'alimentation selon l'une des revendications 1 à 6 adaptée pour injecter dans le convoyeur de tri des objets postaux hétérogènes et une seconde antenne d'alimentation (4,5) adaptée pour injecter dans le convoyeur de tri des articles de courrier plats homogènes.

9. Machine de tri postal selon la revendication8, **caractérisée en ce que** ledit convoyeur de tri est un convoyeur à godets avec des godets (20) qui circulent suivant un trajet en boucle fermée.

10. Machine de tri postal selon la revendication 9, **caractérisée en ce que** les godets (20) du convoyeur à godets ont une grande dimension orientée transversalement à la direction de circulation des godets suivant le trajet en boucle fermée.

11. Machine de tri postal selon l'une des revendications 9 à 10, **caractérisée en ce que** les sorties de tri (3) du convoyeur de tri sont munies chacune d'un réceptacle de sortie de tri dans lequel des articles de courrier plats homogènes triés sont disposés à plat avec des objets postaux hétérogènes triés.

## Patentansprüche

1. Antenne zum Zuführen (6) von heterogenen postalischen Gegenständen (7), wie kleine Päckchen oder Pakete, die dazu bestimmt ist, einem Sortierförderer, der Sortierausgänge aufweist, heterogene postalische Gegenstände zuzuführen, umfassend einen Eingang, der eingerichtet ist, um die heterogenen postalischen Gegenstände zu empfangen, mindestens einen Roboter-Handhabungsarm (6D, 6E, 6I, 6J) vom "Pick-and-Place"-Typ, der eingerichtet ist, um die heterogenen postalischen Gegenstände einzeln zu entnehmen und in Reihe auf einem Flachförderer (6L) zu positionieren, der sie in Reihe flach entlang eines bestimmten Förderwegs verschiebt, ein Bildaufnahmemittel (6N), das entlang des Förderweges angeordnet ist, um ein digitales Bild jedes postalischen Gegenstandes, der eine Postanschrift aufweist, zu bilden, und ein Transferierungsmittel (6M), das an einem Ende des Förderweges angeordnet ist, um jeden postalischen Gegenstand von dem Flachförderer in den Sortierförderer zu transferieren, mindestens einen ersten Roboter-Handhabungsarm (6D, 6E), der eingerichtet ist, um ein gerades Ausrichten der heterogenen postalischen Gegenstände durchzuführen, **dadurch gekennzeichnet, dass** sie mindestens einen zweiten Roboterhandhabungsarm (6I, 6J) aufweist, der eingerichtet ist, um die gerade ausgerichteten postalischen Gegenstände in Reihe flach anzuordnen.

2. Antenne zum Zuführen nach Anspruch 1, **dadurch gekennzeichnet, dass** der zweite Roboter-Handhabungsarm (6I, 6J) ferner eingerichtet ist, um die heterogenen postalischen Gegenstände (7) in einer Längsförderrichtung des Flachförderers auszurichten und sie in Reihe mit konstantem Abstand auf dem Flachförderer zu positionieren.

3. Antenne zum Zuführen nach Anspruch 1 oder 2, **dadurch gekennzeichnet, dass** der erste Roboter-Handhabungsarm (6D, 6E) sechs Freiheitsgrade aufweist und der zweite Roboter-Handhabungsarm (6I, 6J) vier Freiheitsgrade aufweist.

4. Antenne zum Zuführen nach einem der vorhergehenden Ansprüche, **dadurch gekennzeichnet, dass** jeder Handhabungsarm ein pneumatisches Greiforgan mit Saugnapf aufweist.

5. Antenne zum Zuführen nach einem der vorhergehenden Ansprüche, **dadurch gekennzeichnet, dass** sie einen kreisförmigen Flachförderer (6C) zwischen dem Eingang zum Einführen der postalischen Gegenstände und dem oder den Roboter-Handhabungsarmen aufweist.

6. Antenne zum Zuführen nach einem der vorhergehenden Ansprüche, **dadurch gekennzeichnet, dass** das Transferierungsmittel ein Karussell mit Kippplatten (6P) ist.

7. Antenne zum Zuführen nach einem der vorhergehenden Ansprüche, **dadurch gekennzeichnet, dass** das Bildaufnahmemittel (6N) auf zwei gegenüberliegenden Seiten des Flachförders angeordnet ist, um zwei digitale Bilder jeweils von zwei gegenüberliegenden Seiten von jedem postalischen Gegenstand zu bilden.

8. Postsortiermaschine, umfassend einen Sortierförderer, der Sortierausgänge aufweist, **dadurch gekennzeichnet, dass** sie eine erste Antenne zum Zuführen nach einem der Ansprüche 1 bis 6, die eingerichtet ist, um heterogene postalische Gegenstände in den Sortierförderer einzuführen, und eine zweite Antenne zum Zuführen (4, 5) aufweist, die eingerichtet ist, um homogene flache postalische Gegenstände in den Sortierförderer einzuführen.

9. Postsortiermaschine nach Anspruch 8, **dadurch gekennzeichnet, dass** der Sortierförderer ein Becherförderer mit Bechern (20) ist, die entlang einer geschlossenen Schleifenbahn umlaufen.

10. Postsortiermaschine nach Anspruch 9, **dadurch gekennzeichnet, dass** die Becher (20) des Becherförderers eine große Abmessung aufweisen, die quer zu der Umlaufrichtung der Becher entlang der geschlossenen Schleifenbahn ausgerichtet ist.

11. Postsortiermaschine nach einem der Ansprüche 9 bis 10, **dadurch gekennzeichnet, dass** die Sortierausgänge (3) des Sortierförderers jeweils mit einem Sortierausgangsbehälter versehen sind, in dem die sortierten homogenen flachen postalischen Gegenstände mit sortieren heterogenen postalischen Gegenständen flach angeordnet werden.

## Claims

1. A feed branch (6) serving to feed heterogeneous postal articles (7) such as small parcels to a sorting conveyor having sorting outlets, said feed branch including an inlet adapted for receiving said heterogeneous postal articles, at least one robotized handling arm (6D, 6E, 61, 6J) of the "pick and place" type adapted for taking the heterogeneous postal articles one-by-one and for placing them in series on a flat conveyor (6L) that moves them in series and flat along a certain conveyor path, image-taking means (6N) disposed along said conveyor path for the purpose of forming a digital image of each postal article that bears a postal address, and transfer means (6M) disposed at an end of said conveyor path for the purpose of transferring each postal article from the flat conveyor to the sorting conveyor, at least one first robotized handling arm (6D, 6E) that is adapted for singulating said heterogeneous postal articles, said feed branch being **characterized in that** it includes at least one second robotized handling arm (61, 6J) that is adapted for putting said singulated postal articles in series and flat.

2. A feed branch according to claim 1, **characterized in that** said second robotized handling arm (6I, 6J) is further adapted for orienting said heterogeneous postal articles (7) in a longitudinal transport direction of the flat conveyor and for placing them in series and at constant pitch on said flat conveyor.

3. A feed branch according to claim 1 or claim 2, **characterized in that** said first robotized handling arm (6D, 6E) has six degrees of freedom and said second robotized handling arm (6I, 6J) has four degrees of freedom.

4. A feed branch according to any preceding claim, **characterized in that** each handling arm has a suction-cup pneumatic pick-up member.

5. A feed branch according to any preceding claim, **characterized in that** it includes a circular flat conveyor (6C) between the inlet for receiving the postal articles and the robotized handling arm(s).

6. A feed branch according to any preceding claim, **characterized in that** the transfer means are constituted by a tipper-platform carrousel having tipper platforms (6P).

7. A feed branch according to any preceding claim, **characterized in that** the image-taking means (6N) are disposed on two opposite sides of the flat conveyor so as to form two digital images of respective ones of two opposite sides of each postal article.

8. A postal sorting machine including a sorting conveyor having sorting outlets, said postal sorting machine being **characterized in that** it includes a first feed branch according to any one of claims 1 to 6, adapted for automatically injecting heterogeneous postal articles into the sorting conveyor, and a second feed branch (4, 5) adapted for injecting homogeneous flat mailpieces into the sorting conveyor.

9. A postal sorting machine according to claim 8, **characterized in that** said sorting conveyor is a bin conveyor with bins (20) that circulate around a closed-loop path.

10. A postal sorting machine according to claim 9, **characterized in that** each of the bins (20) of the bin conveyor has a long dimension oriented transversely to the circulation direction in which the bins circulate around the closed-loop path.

11. A sorting machine according to claim 9 or claim 10, **characterized in that** each of the sorting outlets (3) of the sorting conveyor is provided with a sorting outlet receptacle in which sorted homogeneous flat mailpieces are placed flat with sorted heterogeneous postal articles.
